# EUROPÄISCHE PATENTSCHRIFT

(11) **EP 4 586 794 B1**
(45) Veröffentlichungstag und Bekanntmachung des Hinweises auf die Patenterteilung: **28.10.2026**
(21) Anmeldenummer: 23765467.8
(22) Anmeldetag: 04.09.2023
(51) Int. Cl.: A01B 69/00

(54) **VERFAHREN UND BODENBEARBEITUNGSSYSTEM ZUM BEARBEITEN EINER LANDWIRTSCHAFTLICHEN NUTZFLAECHE**
METHOD AND SOIL WORKING SYSTEM FOR WORKING AGRICULTURAL LAND
PROCÉDÉ ET SYSTÈME DE TRAVAIL DU SOL POUR TRAVAILLER DES TERRES AGRICOLES

(30) Priorität: 16.09.2022 DE 102022123779
(43) Veröffentlichungstag der Anmeldung: 23.07.2025
(73) Patentinhaber: Amazonen-Werke H. Dreyer SE & Co. KG, 49205 Hasbergen (DE)
(72) Erfinder: RESCH, Rainer, 49170 Hagen a TW (DE)
(74) Vertreter: Heisel, Per-Christian
(86) Internationale Anmeldenummer: PCT/EP2023/074102
(87) Internationale Veröffentlichungsnummer: WO 2024/056415

(56) Entgegenhaltungen:
- EP-A1- 3 698 612
- DE-A1- 102017 109 008
- US-A- 4 141 419
- US-A1- 2018 325 019
- US-A1- 2020 113 115

## Beschreibung

Die Erfindung betrifft ein Verfahren zum Steuern eines Bodenbearbeitungssystems nach dem Oberbegriff des Patentanspruchs 1 und ein Bodenbearbeitungssystem zum Bearbeiten einer landwirtschaftlichen Nutzfläche nach dem Oberbegriff des Patentanspruchs 14.

Bei der Verwendung von landwirtschaftlichen Bodenbearbeitungssystemen kommt der Arbeitsqualität besondere Bedeutung zu. Insbesondere die Gleichmäßigkeit der Arbeitsqualität hängt beim Bearbeiten einer landwirtschaftlichen Nutzfläche von auf das Bodenbearbeitungssystem wirkenden Kräften und einer genauen Einhaltung einer definierten Bewegungsrichtung des Bodenbearbeitungssystems ab. Die auf das Bodenbearbeitungssystem wirkenden Kräfte, insbesondere die Querkräfte, und die Einhaltung einer definierten Bewegungsrichtung, beispielsweise einer möglichst exakten Geradeausfahrt, hängen maßgeblich von der Einstellung der Bodenbearbeitungswerkzeuge des landwirtschaftlichen Bodenbearbeitungsgeräts ab. Nur wenn die Bodenbearbeitungswerkzeuge des Bodenbearbeitungssystems optimal eingestellt sind, kann eine gleichbleibend hohe Arbeitsqualität bei der Bearbeitung einer Nutzfläche sichergestellt werden.

Im Stand der Technik werden zur optimalen Einstellung der Bodenbearbeitungswerkzeuge von landwirtschaftlichen Bodenbearbeitungsgeräten Informationen an einer Kupplungseinrichtung eines landwirtschaftlichen Bodenarbeitsgeräts ermittelt, auf Grundlage derer die Einstellungen des landwirtschaftlichen Bodenbearbeitungsgeräts angepasst werden.

Die Druckschrift DE 10 2017 109 008 A1 zeigt beispielsweise, dass mittels Kraftmesseinrichtungen im Koppelbereich der Unterlenker der Kupplungseinrichtung die bei Kurvenfahrten des Bodenbearbeitungsgeräts auf die Kupplungsvorrichtung wirkenden Kräfte oder die Auslenkung der Unter- oder Oberlenker beispielsweise mittels Wegaufnehmern ermittelt werden.

Aus der Druckschrift DE 10 2017 116 592 A1 ist weiterhin bekannt, die Ausrichtung eines oder mehrerer Lenker einer Kopplungsvorrichtung einer landwirtschaftlichen Zugmaschine und eines Tragrahmens eines Bodenbearbeitungsgeräts zu erfassen und zu vergleichen, um die Zuglinie zwischen der Zugmaschine und dem Bodenbearbeitungsgerät einzustellen.

Ferner ist beispielsweise aus der Druckschrift DE 199 45 853 A1 vorbekannt, die Arbeitstiefe eines Anbaupfluges auf Basis von Lagesensoren am Hubarm eines Dreipunktgestänges und einer Zugkraftmessung im Unterlenker des Dreipunktgestänges über ein hydraulisch verstellbares Hubwerk und ein hydraulisch verstellbares Stützrad zu steuern.

EP 3 698 612 A1 betrifft ein Vermeiden einer Driftbewegung eines Pfluges durch Ausrichten eines Stützrades mittels Bordsensoren des Pfluges. US 4 141 419 A offenbart ein Konstanthalten von erforderlicher Zugkraft und Arbeitsbild bei wechselnden Arbeitsgeschwindigkeiten. US 2018 325 019 A1 und US 2020 113 115 A1 betreffen die Kompensation von Seitenkräften bei bodenbearbeitenden Werkzeugen.

Insofern ist es vorbekannt, die Bodenbearbeitungswerkzeuge eines landwirtschaftlichen Bodenbearbeitungssystems anzupassen, um die Arbeitsqualität des landwirtschaftlichen Bearbeitungsgeräts zu verbessern. Allerdings werden im Stand der Technik dazu bisher Daten im Bereich der Kopplungsvorrichtung zwischen einer Arbeitsmaschine und einem Zugfahrzeug erfasst, beispielsweise die Auslenkung oder die Zugkraft. Die Einstellung der Bodenbearbeitungswerkzeuge nur auf Basis von ermittelten Daten an der Kopplungsvorrichtung anzupassen kann jedoch dazu führen, dass die Anpassung der Einstellung der Bodenbearbeitungswerkzeuge zu träge und nicht mit der notwendigen Präzision erfolgt, sodass die Arbeitsqualität weiterhin nicht optimal ist, insbesondere, da unbeabsichtigte auf das Bodenbearbeitungssystem wirkende Querkräfte und Abweichungen von dem Soll-Bewegungspfad des Bodenbearbeitungssystems nur unzureichend erkannt oder, wenn überhaupt, zu spät korrigiert werden. Zudem führen nicht optimal eingestellte Bodenbearbeitungswerkzeuge neben einer verminderten Arbeitsqualität auch zu einem erhöhten Energieverbrauch des Bodenbearbeitungssystems und zu einem erhöhten Verschleiß der Bodenbearbeitungswerkzeuge.

Die der Erfindung zugrundliegende Aufgabe besteht somit darin, das Anpassen eines Bodenbearbeitungssystems so zu verbessern, dass unbeabsichtigte auf das Bodenbearbeitungssystem wirkende Querkräfte erkannt und verringert oder vermieden werden und dass das Bodenbearbeitungssystem jederzeit einem definierten Soll-Bewegungspfad folgt, ohne von diesem abzuweichen, sodass folglich die Arbeitsqualität erhöht sowie der Energieverbrauch des Bodenbearbeitungssystems und der Verschleiß der Bodenbearbeitungswerkzeuge verringert werden.

Die Aufgabe wird gelöst mit einem Verfahren der eingangs genannten Art, wobei eine Maschinenkonfiguration des Bodenbearbeitungssystems in Abhängigkeit der zumindest einen ermittelten Betriebsgröße des Antriebsstrangs des Bodenbearbeitungssystems zur Verringerung oder Vermeidung von durch einen Bodeneingriff der Bodenbearbeitungswerkzeuge verursachten unbeabsichtigten auf das Bodenbearbeitungssystem wirkenden Querkräften mittels einer Steuerungseinrichtung angepasst wird.

Dadurch, dass eine Maschinenkonfiguration des Bodenbearbeitungssystems in Abhängigkeit der zumindest einen ermittelten Betriebsgröße des Antriebsstrangs des Bodenbearbeitungssystems zur Verringerung oder Vermeidung von durch den Bodeneingriff der Bodenbearbeitungswerkzeuge verursachten unbeabsichtigten auf das Bodenbearbeitungssystem wirkenden Querkräften mittels einer Steuerungseinrichtung angepasst wird, ist das Bodenbearbeitungssystem jederzeit optimal an die aktuellen Gegebenheiten beim Bearbeiten einer landwirtschaftlichen Nutzfläche angepasst, sodass der Soll-Bewegungspfad des Bodenbearbeitungssystems eingehalten und somit die gewünschte Arbeitsqualität erreicht wird. Eine optimale Einstellung des Bodenbearbeitungssystems hat außerdem zur Folge, dass der Energieverbrauch sowie der Verschleiß der Bodenbearbeitungswerkzeuge gesenkt werden, wodurch Wartungskosten des Bodenbearbeitungssystems und die Umweltbelastung reduziert werden. Ferner ermöglicht eine präzise Einstellung des Bodenbearbeitungssystems, die Vermeidung von unbeabsichtigten Querkräften und das exakte Einhalten eines Soll-Bewegungspfads eine sichere autonome Bearbeitung einer landwirtschaftlichen Nutzfläche.

Es können neben unbeabsichtigten Querkräften auch unbeabsichtigte auf das Bodenbearbeitungssystem wirkende Längskräfte auftreten, welche verringert oder verhindert werden sollen. Unbeabsichtigte Quer- und/oder Längskräfte können zu einer Abweichung von einer Soll-Bewegungsrichtung des Bodenbearbeitungssystems während der Feldbearbeitung führen. Zudem können unbeabsichtigte Quer- und/oder Längskräfte den Verschleiß und den Energieverbrauch des Bodenbearbeitungssystems erhöhen sowie die Arbeitsqualität des Bodenbearbeitungssystems verringern. Unbeabsichtigte Querkräfte können beispielsweise durch ungleichmäßige Bodenverhältnisse über der Maschinenbreite verursacht werden. Unbeabsichtigte Längskräfte können beispielsweise durch eine ungeeignete Tiefeneinstellung der Bodenbearbeitungswerkzeuge und eine daraus resultierende zu hohe Eingriffstiefe verursacht werden. Mittels der Betriebsgröße des Antriebsstrangs sind die aktuelle auf das Bodenbearbeitungssystem wirkenden Quer- und/oder Längskräfte bestimmbar. Unbeabsichtigte Änderungen der aktuellen Betriebsgröße des Antriebsstrangs können auf eine unbeabsichtigte Änderung aktueller Quer- und/oder Längskräfte, beispielsweise an der Kopplung einer Arbeitsmaschine und einem Zugfahrzeug, hinweisen. Unbeabsichtigte Quer- und/oder Längskräfte können für eine Verschiebung des Zugpunktes und/oder der Zuglinie sorgen. Unbeabsichtigte Änderungen der aktuellen Quer- und/oder Längskräfte können mittels Anpassen einer Maschinenkonfiguration des Bodenbearbeitungssystems ausgeglichen werden. Zusätzlich zu der Betriebsgröße des Antriebsstrangs können weitere Informationen erfasst werden, mittels welcher unbeabsichtigte Quer- und/oder Längskräfte ermittelt werden können, beispielsweise mittels Abstandssensoren, Neigungssensoren, Beschleunigungssensoren, Drehratensensoren, Lenkwinkelsensoren und/oder mittels einer optischen Erfassung der Lage des Bodenbearbeitungssystems und/oder der Bodenbearbeitungswerkzeuge.

Die Betriebsgröße des Antriebsstrangs ist vorzugsweise eine aktuelle Betriebsgröße. Mittels der Betriebsgröße des Antriebsstrangs können unbeabsichtigte auf das Bodenbearbeitungssystem wirkende Querkräfte bestimmt werden. Unbeabsichtigte Änderungen der aktuellen Betriebsgröße des Antriebsstrangs weisen auf unbeabsichtigte auf das Bodenbearbeitungssystem wirkende Querkräfte hin. Die ermittelte Betriebsgröße des Antriebsstrangs kann mit einem Betriebsgrößensollwert verglichen werden, wobei Abweichungen der ermittelten Betriebsgröße von dem Betriebsgrößensollwert auf unbeabsichtigte auf das Bodenbearbeitungssystem wirkende Querkräfte hinweisen können. Betriebsgrößensollwerte können beispielsweise aus einer Betriebsgrößenkennlinie abgeleitet werden. Alternativ oder zusätzlich kann die ermittelte Betriebsgröße mit zumindest einer zweiten ermittelten Betriebsgröße des Bodenbearbeitungssystems verglichen werden, wobei vorzugsweise ein Überschreiten oder Unterschreiten eines definierten Grenzwerts einer Abweichung der beiden verglichenen Betriebsgrößen auf unbeabsichtigte Querkräfte hinweisen kann. Aus der Größe der Abweichung der ermittelten Betriebsgröße von dem Betriebsgrößensollwert oder von der zweiten Betriebsgröße kann bestimmt werden, in welchem Maß eine Maschinenkonfiguration zur Verringerung oder Vermeidung der unbeabsichtigten Quer- und/oder Längskräfte angepasst werden muss. Insbesondere kann eine Steuerung und/oder Regelung vorgesehen sein, über die die Abweichung der ermittelten Betriebsgröße von dem Betriebsgrößensollwert oder von der zweiten Betriebsgröße reduziert und/oder minimiert wird.

Unbeabsichtigte auf das Bodenbearbeitungssystem wirkende Querkräfte können mittels Anpassen einer Maschinenkonfiguration des Bodenbearbeitungssystems ausgeglichen werden. Dieses Anpassen kann mittels einer Steuerung und/oder Regelung erfolgen, über die die Abweichung der ermittelten Betriebsgröße von dem Betriebsgrößensollwert oder von der zweiten Betriebsgröße reduziert und/oder minimiert wird. Die Steuerungseinrichtung ist vorzugsweise Bestandteil des Bodenbearbeitungssystems. Die Steuerungseinrichtung kann beispielsweise Bestandteil eine Bedienterminals des Bodenbearbeitungssystems sein. Die Steuerungseinrichtung kann zudem eine externe Steuerungseinrichtung sein, beispielsweise ein mobiles Endgerät, ein externer PC oder Server. Die Betriebsgrößenerfassungseinheit ist vorzugsweise Bestandteil des Bodenbearbeitungssystems. Die Steuerungseinrichtung kann eingerichtet sein, die o. g. Steuerung und/oder Regelung auszuführen.

Das Bodenbearbeitungssystem kann ein Maschinenverbund oder ein Bestandteil eines Maschinenverbunds sein. Der Maschinenverbund umfasst vorzugsweise ein Zug- oder Trägerfahrzeug und eine landwirtschaftliche Arbeitsmaschine. Das Zug- oder Trägerfahrzeug und die landwirtschaftliche Arbeitsmaschine des Maschinenverbundes sind vorzugsweise mittels einer Kopplungsvorrichtung, beispielsweise mittels einer Dreipunkthydraulik, miteinander reversibel lösbar verbunden. Das Bodenbearbeitungssystem kann alternativ auch eine selbstfahrende landwirtschaftliche Maschine oder ein Bestandteil einer selbstfahrenden landwirtschaftlichen Maschine sein.

Das eine oder die mehreren Bodenbearbeitungswerkzeuge können als Schare, als Zinken, als Scheiben, als Striegel oder als Walzen ausgebildet sein. Das eine oder die mehreren Bodenbearbeitungswerkzeuge können angetrieben oder nicht angetrieben sein. Das eine oder die mehreren Bodenbearbeitungswerkzeuge sind vorzugsweise an einem oder an mehreren Trägern quer zur Fahrtrichtung nebeneinander und/oder in Fahrtrichtung hintereinander angeordnet. Das Bodenbearbeitungssystem kann einen Pflug, einen Grubber, eine Egge, eine Hacke oder eine Sämaschine umfassen. Das Steuern des Bodenbearbeitungssystems erfolgt vorzugsweise selbsttätig. Das Bearbeiten der landwirtschaftlichen Nutzfläche erfolgt vorzugsweise autonom.

Der Antriebsstrang des Bodenbearbeitungssystems kann zumindest einen Antrieb, eine Kupplung, ein Getriebe, ein Differenzial, zumindest eine Welle und zumindest ein Rad und/oder zumindest ein Laufwerk umfassen. Der Antrieb kann zumindest einen Verbrennungsmotor und/oder zumindest einen Elektromotor umfassen. Zudem kann der Antrieb hydraulisch und/oder pneumatisch arbeiten. Zusätzlich zu der Betriebsgröße des Antriebsstrangs können weitere Informationen erfasst werden, mittels welcher unbeabsichtigte auf das Bodenbearbeitungssystem wirkende Querkräfte und/oder Abweichungen von einem Soll-Bewegungspfad ermittelt werden können, beispielsweise mittels Abstandssensoren, Neigungssensoren, Beschleunigungssensoren, Drehratensensoren, Lenkwinkelsensoren und/oder mittels einer optischen Erfassung der Lage des Bodenbearbeitungssystems und/oder der Bodenbearbeitungswerkzeuge.

Unbeabsichtigte Abweichungen von einem Soll-Bewegungspfad des Bodenbearbeitungssystems können zudem mittels eines Satellitennavigationssystems, insbesondere per GPS, mittels Drehratensensoren und/oder mittels Beschleunigungssensoren erfasst werden, insbesondere mittels Positions- und/oder Fahrtrichtungserfassung basierend auf einem hinterlegten Fahrgassensystem.

In einer bevorzugten Ausführungsform des erfindungsgemäßen Verfahrens werden durch das Anpassen der Maschinenkonfiguration des Bodenbearbeitungssystems durch den Bodeneingriff der Bodenbearbeitungswerkzeuge verursachte unbeabsichtigte Abweichungen von einem Soll-Bewegungspfad des Bodenbearbeitungssystems reduziert oder verhindert. Der Soll-Bewegungspfad umfasst vorzugsweise eine exakte Geradeausfahrt des Bodenbearbeitungssystems. Der Soll-Bewegungspfad kann zudem Kurvenfahrten und/oder Wendemanöver des Bodenbearbeitungssystems umfassen. Unbeabsichtigte Abweichungen von einem Soll-Bewegungspfad können aus unbeabsichtigten auf das Bodenbearbeitungssystem wirkenden Querkräften, welche beispielsweise durch ungleichmäßige Bodenverhältnisse über der Maschinenbreite verursacht werden, resultieren. Unbeabsichtigte Abweichungen von einem Soll-Bewegungspfad können aus unbeabsichtigten auf das Bodenbearbeitungssystem wirkenden Längskräften, welche beispielsweise durch eine zu hohe Tiefeneinstellung der Bodenbearbeitungswerkzeuge und eine daraus resultierende zu hohe Eingriffstiefe verursacht werden, resultieren. Bei feuchtem Boden sollte die Eingriffstiefe kleiner sein als bei trockenem Boden, beispielsweise kleiner als 25 cm Eingriffstiefe bei feuchtem Boden. Bei optimal eingestelltem Zugpunkt und/oder optimal eingestellter Zuglinie des Bodenbearbeitungssystems fährt das Bodenbearbeitungssystem exakt in eine gewünschte Richtung, insbesondere exakt geradeaus. Eine Abweichung von einem Soll-Bewegungspfad kann durch ein Routenführungssystem des Bodenbearbeitungssystems ausgeglichen werden, jedoch müsste das Routenführungssystem ohne eine Anpassung der Maschinenkonfiguration gegen die Querkräfte arbeiten, welche sich dadurch weiter erhöhen könnten.

Im erfindungsgemäßen Verfahren ist die mittels der Betriebsgrößenerfassungseinheit ermittelte Betriebsgröße des Antriebsstrangs eine Leistung und/oder ein Drehmoment. Die Leistung kann eine mechanische Leistung, eine elektrische Leistung, eine hydraulische Leistung, eine Verlustleistung oder eine Blindleistung sein. Die Leistung kann eine von einer Komponente des Antriebsstrangs abgegebene, aufgenommene und/oder übertragene Leistung sein. Beim Ermitteln der Leistung und/oder des Drehmoments kann ein Wirkungsgrad berücksichtigt werden. Die Betriebsgröße des Antriebsstrangs kann die Leistung und/oder das Drehmoment an zumindest einem Rad und/oder an zumindest einem Laufwerk des Antriebsstrangs des Bodenbearbeitungssystems sein. Die Betriebsgröße des Antriebsstrangs kann die Leistung und/oder das Drehmoment an zumindest einer Welle, Kupplung und/oder eines Differenzials des Antriebsstrangs des Bodenbearbeitungssystems sein. Die Betriebsgröße des Antriebsstrangs kann die von einem Antrieb des Antriebsstrangs des Bodenbearbeitungssystems abgegebene Leistung und/oder das abgegebene Drehmoment sein. Die Betriebsgröße des Antriebsstrangs kann die von einem Getriebe des Antriebsstrangs des Bodenbearbeitungssystems zu übersetzende Leistung und/oder das übersetzende Drehmoment sein. Die Betriebsgröße des Antriebsstrangs kann die von einem Getriebe des Antriebsstrangs des Bodenbearbeitungssystems übersetzte Leistung und/oder das übersetzte Drehmoment sein. Eine bekannte Getriebeübersetzung kann zur Umrechnung eines Drehmoments vor dem Getriebe in ein Drehmoment nach dem Getriebe herangezogen werden. Eine bekannte Getriebeübersetzung kann zur Umrechnung eines Drehmoments nach dem Getriebe in ein Drehmoment vor dem Getriebe herangezogen werden. Des Weiteren können ein Hydraulikdurchfluss bei hydraulischen Antrieben, die elektrische Leistungsaufnahme bei elektrischen Antrieben und/oder die tatsächlich anliegenden Drehzahlen an den Rädern und/oder an den Laufwerken des Bodenbearbeitungssystems ermittelt werden.

In einer Weiterbildung des erfindungsgemäßen Verfahrens werden zumindest zwei Betriebsgrößen des Antriebsstrangs ermittelt und mittels der Steuerungseinrichtung miteinander und/oder mit einem Sollwert verglichen, wobei das Anpassen der Maschinenkonfiguration zur Verringerung oder Vermeidung von durch den Bodeneingriff der Bodenbearbeitungswerkzeuge verursachten unbeabsichtigten auf das Bodenbearbeitungssystem wirkenden Querkräften vorzugsweise dann erfolgt, wenn ein die zumindest zwei Betriebsgrößen berücksichtigender Betriebsgrößenvergleich eine Grenzwertüberschreitung ergibt. Vorzugsweise werden an zumindest zwei gegenüberliegenden Seiten, beispielsweise links und rechts und/oder vorne und hinten, des Bodenbearbeitungssystems zumindest jeweils eine, insbesondere die gleiche, Betriebsgröße des Antriebsstrangs ermittelt. Es können zwei verschiedene Werte einer Betriebsgröße an zwei unterschiedlichen Positionen des Antriebsstrangs und/oder zwei unterschiedliche Betriebsgrößen ermittelt werden. Beispielsweise wird die Drehzahl und/oder die Leistung und/oder das Drehmoment an zumindest zwei Wellen und/oder an zumindest zwei Rädern und/oder an zumindest zwei Antrieben des Bodenbearbeitungssystems ermittelt. Bei Überschreitung eines Grenzwerts einer Abweichung der zumindest zwei miteinander verglichenen Betriebsgrößen des Antriebsstrangs und/oder der zwei miteinander verglichenen Werte einer Betriebsgröße des Antriebsstrangs und/oder bei Überschreitung eines Grenzwerts einer Abweichung der ermittelten Betriebsgrößen und/oder der ermittelten Werte einer Betriebsgröße von einem Betriebsgrößensollwert kann eine über die Breite des Bodenbearbeitungssystems ungleichmäßige Belastung des Bodenbearbeitungssystems vorliegen, wodurch unbeabsichtigte auf das Bodenbearbeitungssystem wirkende Querkräfte verursacht werden können.

Es ist ferner ein erfindungsgemäßes Verfahren bevorzugt, bei welchem ein Antrieb des Antriebsstrangs als Elektromotor ausgebildet ist, wobei zum Ermitteln der Betriebsgröße des Antriebsstrangs die an dem Elektromotor anliegende elektrische Spannung und/oder die vom Elektromotor aufgenommene elektrische Stromstärke erfasst wird. Mittels der erfassten elektrischen Spannung und/oder der erfassten elektrischen Stromstärke kann die von dem als Elektromotor ausgebildeten Antrieb des Antriebsstrangs aufgenommene elektrische Leistung bestimmt werden. Mittels der erfassten elektrischen Spannung und/oder der erfassten elektrischen Stromstärke kann die von dem als Elektromotor ausgebildeten Antrieb des Antriebsstrangs abgegebene mechanische Leistung und/oder das abgegebene Drehmoment bestimmt werden. Ein abgegebenes Drehmoment kann alternativ oder zusätzlich mittels Dehnungsmessstreifen und/oder mittels einer Messung der elastischen Verformung der Molekularstruktur einer ferromagnetischen Welle (Magnetostriktion) bestimmt werden.

In einer weiteren bevorzugten Ausführungsform des erfindungsgemäßen Verfahrens wird beim Anpassen der Maschinenkonfiguration des Bodenbearbeitungssystems eine Stellung zumindest eines Bodenbearbeitungswerkzeugs zur Verringerung oder Vermeidung der unbeabsichtigten auf das Bodenbearbeitungssystem wirkenden Querkräften angepasst. Die Stellung der Bodenbearbeitungswerkzeuge wird vorzugsweise über zumindest einen Aktor angepasst. Der zumindest eine Aktor kann ein Linearantrieb, beispielsweise ein Hydraulikzylinder sein. Beim Anpassen der Konfiguration von Bodenbearbeitungswerkzeugen kann die Neigung und/oder der Anstellwinkel und/oder die Eingriffstiefe in den Boden der Bodenbearbeitungswerkzeuge angepasst werden. Durch das Anpassen der Konfiguration der Bodenbearbeitungswerkzeuge können die Bodenbearbeitungseigenschaften der Bodenbearbeitungswerkzeuge, beispielsweise die Furchenbreite, insbesondere die Vorderfurchenbreite und/oder die Eingriffstiefe einer in den Boden der landwirtschaftlichen Nutzfläche gezogenen Furche, verändert werden. Durch das Anpassen der Maschinenkonfiguration können die auf das Bodenbearbeitungssystem wirkenden Quer- und/oder Längskräfte und/oder die Bewegungsrichtung des Bodenbearbeitungssystems verändert werden. Durch das Anpassen der Maschinenkonfiguration können unbeabsichtigte Quer- und/oder Längskräfte und/oder unbeabsichtigte Abweichungen von einem Soll-Bewegungspfad des Bodenbearbeitungssystems ausgeglichen werden.

Es ist weiterhin ein erfindungsgemäßes Verfahren vorteilhaft, bei welchem die Bodenbearbeitungswerkzeuge als Pflugkörper und/oder Schare ausgebildet sind, wobei beim Anpassen der Maschinenkonfiguration die Ausrichtung zumindest eines Pflugkörpers oder zumindest eines Schars zur Verringerung oder Vermeidung der unbeabsichtigten auf das Bodenbearbeitungssystem wirkenden Querkräften angepasst wird. Die Pflugkörper und/oder die Schare können an einem landwirtschaftlichen Pflug oder einem Grubber angeordnet sein. Die Ausrichtung der Pflugkörper und/oder Schare wird vorzugsweise über zumindest einen Aktor angepasst. Der zumindest eine Aktor kann ein Linearantrieb, beispielsweise ein Hubzylinder, sein. Vorzugsweise werden die Pflugkörper eines landwirtschaftlichen Pfluges so eingestellt, dass alle Pflugkörper gleich tief und gleich breit in den Boden eingreifen.

In einer Weiterbildung des erfindungsgemäßen Verfahrens sind die Pflugkörper und/oder die Schare an zumindest einem Träger des Bodenbearbeitungssystems angeordnet, wobei beim Anpassen der Maschinenkonfiguration die Pflugkörper und/oder die Schare zur Verringerung oder Vermeidung der unbeabsichtigten auf das Bodenbearbeitungssystem wirkenden Querkräften vorzugsweise mittels des Trägers gemeinsam um eine Hochachse verschwenkt werden. Alternativ oder zusätzlich kann der Schnittwinkel der Pflugkörper unabhängig von einem Verschwenken des Trägers verändert werden. Der zumindest eine Träger kann parallel zum Boden an dem Bodenbearbeitungssystem angeordnet sein. Der zumindest eine Träger kann parallel zur Fahrtrichtung des Bodenbearbeitungssystems an dem Bodenbearbeitungssystem angeordnet sein. Der zumindest eine Träger kann schräg zur Fahrtrichtung des Bodenbearbeitungssystems an dem Bodenbearbeitungssystem angeordnet sein. Der zumindest eine Träger kann quer zur Fahrtrichtung des Bodenbearbeitungssystems an dem Bodenbearbeitungssystem angeordnet sein. Der zumindest eine Träger kann Bestandteil eines Pfluges sein. Die Pflugkörper und/oder die Schare sind vorzugsweise nebeneinander und/oder schräg versetzt zueinander an dem zumindest einen Träger angeordnet. Der zumindest eine Träger kann mit den Pflugkörpern und/oder den Scharen gemeinsam mittels eines Aktors, beispielsweise mittels eines Hydraulikzylinders verschwenkt werden.

Es ist ferner ein erfindungsgemäßes Verfahren bevorzugt, bei welchem der Anstellwinkel der Pflugkörper und/oder der Schare beim Anpassen der Maschinenkonfiguration unabhängig von einer Schwenkbewegung des Trägers zur Verringerung oder Vermeidung der unbeabsichtigten auf das Bodenbearbeitungssystem wirkenden Querkräften verändert wird. Dies erfolgt durch ein gemeinsames oder individuelles Verschwenken der Schare um jeweils eine Hochachse. Über den Anstellwinkel kann der Pflugkörpereingriff in den Boden verändert werden.

In einer anderen bevorzugten Ausführungsform des erfindungsgemäßen Verfahrens wird beim Anpassen der Maschinenkonfiguration die Eingriffstiefe der Pflugkörper und/oder der Schare in den Boden vorzugsweise mittels einer Hubbewegung der Pflugkörper und/oder der Schare zur Verringerung oder Vermeidung der unbeabsichtigten auf das Bodenbearbeitungssystem wirkenden Querkräften verändert. Die Hubbewegung der Pflugkörper und/oder der Schare erfolgt vorzugsweise über zumindest einen Träger, an welchem die Pflugkörper und/oder Schare angeordnet sind. Der zumindest eine Träger kann mehrere Segmente umfassen, wobei die Segmente unabhängig voneinander unterschiedliche Hubbewegungen, insbesondere eine Schwenkbewegung um eine in Fahrtrichtung des Bodenbearbeitungssystems liegende Schwenkachse und/oder eine lineare senkrechte Hubbewegung, ausführen können. Vorzugsweise wird die Hubbewegung mittels zumindest eines Unterlenkers einer Kopplungsvorrichtung eines Zug- oder Trägerfahrzeugs, insbesondere einer Dreipunkthydraulik, des Bodenbearbeitungssystems und/oder mittels zumindest eines Stützrades und/oder einer Walze ausgeführt. Bei einem Pflug ist das Stützrad vorzugsweise im hinteren Bereich des Pfluges montiert. Bei einem Grubber ist das Stützrad vorzugsweise im vorderen Bereich des Grubbers montiert. Ein Grubber kann im hinteren Bereich zusätzlich Fahrwerksräder aufweisen. Mittels des Stützrades können zusätzlich die Bodenverhältnisse abgetastet werden (Funktion als Tastrad), sodass ungleichmäßige Bodenverhältnisse erkannt werden können. Alternativ oder zusätzlich kann die Hubbewegung mittels eines Oberlenkers einer Kupplungsvorrichtung eines Zug- oder Trägerfahrzeugs des Bodenbearbeitungssystems und/oder mittels zumindest eines Aktors des Bodenbearbeitungssystems ausgeführt werden. Bei einem getragenen Grubber kann eine Hubbewegung insbesondere mittels eines Unterlenkers und einer Walze ausgeführt werden. Bei einem gezogenen Grubber kann eine Hubbewegung insbesondere über vorn am Grubber angeordnete Stützräder und eine Walze und/oder über Stützräder und die Fahrwerksräder des Grubbers ausgeführt werden.

Es ist weiterhin ein erfindungsgemäßes Verfahren vorteilhaft, bei welchem beim Anpassen der Maschinenkonfiguration des Bodenbearbeitungssystems eine Betriebsgröße des Antriebsstrangs zur Verringerung oder Vermeidung der unbeabsichtigten auf das Bodenbearbeitungssystem wirkenden Querkräften angepasst wird. Beim Anpassen der Maschinenkonfiguration des Bodenbearbeitungssystems kann die Drehzahl und/oder die Leistung und/oder das Drehmoment an einer Komponente des Antriebsstrangs angepasst werden.

In einer anderen bevorzugten Ausführungsform des erfindungsgemäßen Verfahrens wird beim Anpassen der Maschinenkonfiguration des Bodenbearbeitungssystems die Drehzahl und/oder die Leistung und/oder das Drehmoment und/oder der Lenkeinschlag an zumindest einem Rad des Bodenbearbeitungssystems angepasst. Um unbeabsichtigte Abweichungen von einem Soll-Bewegungspfad auszugleichen, kann zumindest an einem Rad des Bodenbearbeitungssystems der Lenkeinschlag angepasst werden (Gegenlenken). Zudem kann durch Anpassen der Radleistung und/oder der Raddrehzahl bewirkt werden, dass das Bodenbearbeitungssystem seine Fahrtrichtung beibehält und somit Abweichungen von einem Soll-Bewegungspfad verhindert werden.

Es ist ferner ein erfindungsgemäßes Verfahren vorteilhaft, bei welchem beim Anpassen der Maschinenkonfiguration des Bodenbearbeitungssystems in Abhängigkeit der ermittelten Betriebsgröße des Antriebsstrangs mittels der Steuerungseinrichtung beabsichtigte Abweichungen von dem Soll-Bewegungspfad des Bodenbearbeitungssystems und/oder beabsichtigte auf das Bodenbearbeitungssystem wirkende Quer- und/oder Längskräfte berücksichtigt werden, wobei beabsichtigte Abweichungen von dem Soll-Bewegungspfad des Bodenbearbeitungssystems und/oder beabsichtigte auf das Bodenbearbeitungssystem wirkende Quer- und/oder Längskräfte vorzugsweise von einer aktuellen Maschinenkonfiguration des Bodenbearbeitungssystems und/oder aktuellen beabsichtigten Fahrsituationen und/oder einer vorgeplanten beabsichtigten Änderung der Fahrsituation verursacht werden. Vorgeplante beabsichtigte Änderungen der Fahrsituation können aus Spurplanungsdaten und/oder aus einem Fahrgassensystem und/oder aus einem Lenkbefehl abgeleitet werden. Vorgeplante beabsichtigte Änderungen der Fahrsituationen können aus der Geoposition und/oder der Bewegungsrichtung des Bodenbearbeitungssystems abgeleitet werden. Beabsichtigte auf das Bodenbearbeitungssystem wirkende Quer- und/oder Längskräfte können aus beabsichtigten Kurvenfahrten, Wendemanövern und Fahrgeschwindigkeitsänderungen resultieren. Beabsichtigte auf das Bodenbearbeitungssystem wirkende Quer- und/oder Längskräfte können aus einer beabsichtigten Einstellung der Pflugkörper und/oder Schare, beispielsweise zur Erzeugung eines Anlagedrucks von Pflugkörpern an eine Furchenwand einer in den Boden gezogenen Furche und/oder bei Einstellung für eine pflanzenbaulich bedingte Eingriffstiefe der Pflugkörper und/oder Schare, resultieren. Beim Anpassen der Maschinenkonfiguration werden beabsichtigte Quer- und/oder Längskräfte berücksichtigt, sodass diese nicht mit unbeabsichtigten Quer- und/oder Längskräften verwechselt werden und die Maschinenkonfiguration nicht fälschlicherweise angepasst wird.

Die der Erfindung zugrundeliegende Aufgabe wird ferner durch ein Bodenbearbeitungssystem der eingangs genannten Art gelöst, wobei das erfindungsgemäße Bodenbearbeitungssystem eine Steuerungseinrichtung umfasst, welche dazu eingerichtet ist, eine Maschinenkonfiguration des Bodenbearbeitungssystems in Abhängigkeit der ermittelten Betriebsgröße des Antriebsstrangs des Bodenbearbeitungssystems zur Verringerung oder Vermeidung von durch den Bodeneingriff des Bodenbearbeitungswerkzeuge verursachten unbeabsichtigten auf das Bodenbearbeitungssystem wirkenden Querkräften anzupassen.

In einer bevorzugten Ausführungsform des erfindungsgemäßen Bodenbearbeitungssystems ist das Bodenbearbeitungssystem dazu eingerichtet, das Verfahren nach einer der vorstehenden Ausführungsformen auszuführen. Hinsichtlich der Vorteile und Modifikationen des erfindungsgemäßen Bodenbearbeitungssystems wird daher auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes Bodenbearbeitungssystem mit landwirtschaftlichem Pflug bei der Bearbeitung einer landwirtschaftlichen Nutzfläche entlang eines Soll-Bewegungspfads in einer schematischen Draufsicht;
- Fig. 2: das Bodenbearbeitungssystem aus Fig. 1 bei der Bearbeitung einer landwirtschaftlichen Nutzfläche mit unbeabsichtigten auf das Bodenbearbeitungssystem wirkenden Querkräften und angepasster Maschinenkonfiguration in einer schematischen Draufsicht;
- Fig. 3: das Bodenbearbeitungssystem aus Fig. 2 bei der Bearbeitung einer landwirtschaftlichen Nutzfläche mit unbeabsichtigten auf das Bodenbearbeitungssystem wirkenden Querkräften und angepasster Maschinenkonfiguration in einer schematischen Draufsicht;
- Fig. 4: ein Bodenbearbeitungssystem mit landwirtschaftlichem Grubber bei der Bearbeitung einer landwirtschaftlichen Nutzfläche entlang eines Soll-Bewegungspfads in einer schematischen Draufsicht;
- Fig. 5a: die Schare des Grubbers aus Fig. 4 mit gleichmäßiger Eingriffstiefe bei der Bearbeitung der landwirtschaftlichen Nutzfläche in einer schematischen Ansicht von hinten;
- Fig. 5b: die Schare des Grubbers aus Fig. 5a bei der Bearbeitung der landwirtschaftlichen Nutzfläche mit unterschiedlichen Bodenverhältnissen und unbeabsichtigten auf das Bodenbearbeitungssystem wirkenden Querkräften in einer schematischen Ansicht von hinten;
- Fig. 6: das Bodenbearbeitungssystem aus Fig. 4 bei der Bearbeitung einer landwirtschaftlichen Nutzfläche mit unbeabsichtigten auf das Bodenbearbeitungssystem wirkenden Querkräften in einer schematischen Draufsicht;
- Fig. 7: die Schare des Grubbers aus Fig. 6 mit ungleichmäßiger Eingriffstiefe bei der Bearbeitung der landwirtschaftlichen Nutzfläche in einer schematischen Ansicht von hinten;
- Fig. 8a: die Schare aus Fig. 7 mit mittels einer Verschwenkung angepasster Maschinenkonfiguration und gleichmäßigerer Eingriffstiefe bei der Bearbeitung der landwirtschaftlichen Nutzfläche in einer schematischen Ansicht von hinten; und
- Fig. 8b: die Schare aus Fig. 8a mit mittels einer Linearbewegung angepasster Maschinenkonfiguration und gleichmäßigerer Eingriffstiefe bei der Bearbeitung der landwirtschaftlichen Nutzfläche in einer schematischen Ansicht von hinten.

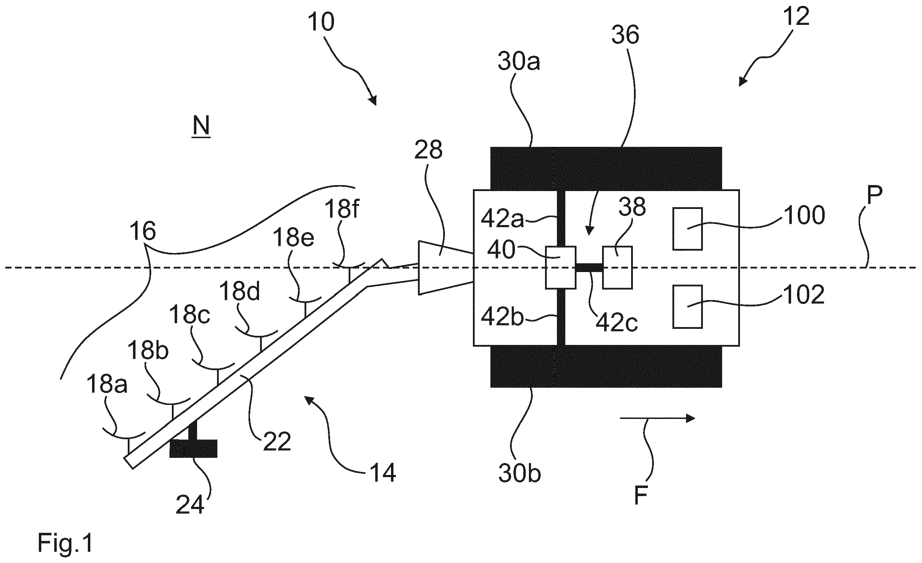

Die Fig. 1 zeigt ein erfindungsgemäßes Bodenbearbeitungssystem 10 während der Bearbeitung einer landwirtschaftlichen Nutzfläche N. Das Bodenbearbeitungssystem 10 umfasst ein Zugfahrzeug 12 und eine landwirtschaftliche Arbeitsmaschine 14. Die landwirtschaftliche Arbeitsmaschine 14 ist als Pflug ausgebildet. Das Zugfahrzeug 12 ist als Raupenfahrzeug ausgebildet. Das Zugfahrzeug 12 und die landwirtschaftliche Arbeitsmaschine 14 sind mittels einer Kopplungsvorrichtung 28, welche beispielsweise als Dreipunkthydraulik ausgebildet ist, miteinander reversibel lösbar verbunden. Bei der Bearbeitung der landwirtschaftlichen Nutzfläche N fährt das Bodenbearbeitungssystem 10 in der Fahrtrichtung F und folgt dabei dem Soll-Bewegungspfad P. Der Soll-Bewegungspfad P entspricht hier einer exakten Geradeausfahrt des Bodenbearbeitungssystems über die Nutzfläche N.

Das Bodenbearbeitungssystem 10 umfasst zudem eine Steuerungseinrichtung 100 und eine Betriebsgrößenerfassungseinheit 102. Mittels der Betriebsgrößenerfassungseinheit 102 wird zumindest eine Betriebsgröße des Antriebsstrangs 36 des Bodenbearbeitungssystems 10 ermittelt. Der Antriebsstrang 36 umfasst einen Antrieb 38, Wellen 42-42c, ein Getriebe 40 und Laufwerke 30a, 30b. Der Antrieb 38 kann beispielsweise ein Verbrennungsmotor oder ein Elektromotor sein. Der Antrieb 38 kann ein zentraler Elektromotor sein oder beispielsweise jeweils einen separaten Elektromotor für jedes Rad und/oder jedes Laufwerk und/oder jede Achse des Bodenbearbeitungssystems 10 umfassen. Die von dem Antrieb 38 erzeugte Antriebsleistung wird mittels der Welle 42 auf das Getriebe 40 übertragen, mittels welchem die Übersetzung der Antriebsleistung auf die Laufwerke 30a, 30b gewählt werden kann. Die Welle 42a überträgt die von dem Getriebe 40 übersetzte Antriebsleistung auf das Laufwerk 30a und die Welle 42 überträgt die vom Getriebe übersetzte Antriebsleistung auf das Laufwerk 30b. Die von der Betriebsgrößenerfassungseinheit erfasste Betriebsgröße kann beispielsweise die von dem Antrieb 38 abgegebene Antriebsleistung, die vom Getriebe 40 übersetzten Antriebsleistungen und/oder die von den Laufwerken 30a, 30b auf die Nutzfläche N aufgebrachte Antriebsleistung sein. Alternativ oder zusätzlich zu einer Antriebsleistung kann beispielsweise auch das Drehmoment an der jeweiligen Komponente des Antriebsstrangs 36 ermittelt werden. Es kann zudem beispielsweise die Drehzahl an einem oder beiden Laufwerken 30a, 30b ermittelt werden. Ist der Antrieb 38 als Elektromotor ausgebildet, kann beispielsweise eine aufgenommene Stromstärke und/oder eine anliegende elektrische Spannung ermittelt werden.

Mittels der Steuerungseinrichtung 100 kann eine Maschinenkonfiguration des Bodenbearbeitungssystems 10 in Abhängigkeit einer oder mehrerer erfasster Betriebsgrößen des Antriebsstrangs 36 angepasst werden. Ergeben die erfassten Betriebsgrößen des Antriebsstrangs 36, dass unbeabsichtigte Querkräfte A auf das Bodenbearbeitungssystem 10 wirken, kann die Steuerungseinrichtung 100 veranlassen, dass die Maschinenkonfiguration des Bodenbearbeitungssystems 10 so verändert wird, dass die unbeabsichtigten Querkräfte A verringert und/oder verhindert werden.

Die als Pflug ausgebildete landwirtschaftliche Arbeitsmaschine 14 umfasst einen Träger 22, an welchem Bodenbearbeitungswerkzeuge 16 angeordnet sind. Die Bodenbearbeitungswerkzeuge 16 umfassen Pflugkörper 18a-18f. Der Träger 22 ist über die Kopplungsvorrichtung mit dem Zugfahrzeug 12 verbunden. Mittels der Pflugkörper 18a-18f werden durch Bodeneingriff in die Nutzfläche N Furchen in den Boden gezogen. Zudem ist an dem Träger 22 ein Stützrad 24 angeordnet, mittels welchem der Pflug auf der Nutzfläche N abgestützt und geführt wird.

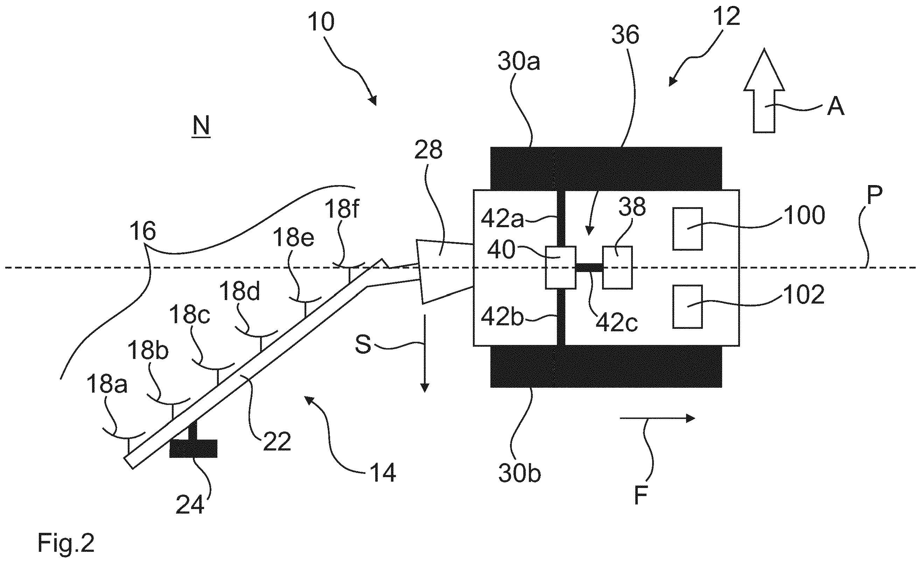

Die Fig. 2 zeigt das Bodenbearbeitungssystem 10 bei der Bearbeitung der Nutzfläche N, wobei unbeabsichtigte Querkräfte A auf das Bodenbearbeitungssystem 10 wirken. Um den Querkräften A entgegenzuwirken, wird durch die Steuerungseinrichtung 100 eine Anpassung der Maschinenkonfiguration in Abhängig der von der Betriebsgrößenerfassungseinheit 102 ermittelten Betriebsgrößen des Antriebsstrangs 36 vorgenommen. Eine Anpassung der Maschinenkonfiguration kann das Anpassen der Einstellung der Pflugkörper 18a-18f sein. Mittels eines Schwenkzylinders kann eine Schwenkbewegung S des Trägers 22 um eine Hochachse ausgeführt werden. Mittels der Schwenkbewegung S werden alle Pflugkörper 18a-18f gemeinsam mit dem Träger 22 verschwenkt. Durch das Verschwenken der Pflugkörper 18a-18f verändert sich die Ausrichtung der Pflugkörper 18a-18b und somit der Bodeneingriff der Pflugkörper 18a-18f in den Boden der landwirtschaftlichen Nutzfläche N. Durch eine Veränderung des Bodeneingriffs der Pflugkörper 18a-18f in den Boden können unbeabsichtigte Quer- und/oder Längskräfte reduziert oder verhindert werden, sodass eine Abweichung des Bodenbearbeitungssystem 10 von seinem Soll-Bewegungspfad P verhindert wird. Alternativ oder zusätzlich können die Querkräfte A verhindert werden, indem im Zuge einer Anpassung der Maschinenkonfiguration zumindest eine Betriebsgröße des Antriebsstrangs 36 angepasst wird. Beispielsweise kann den Querkräften A entgegengewirkt werden, indem die Leistung und/oder das Drehmoment an einem der Laufwerke 30a, 30b erhöht oder verringert wird.

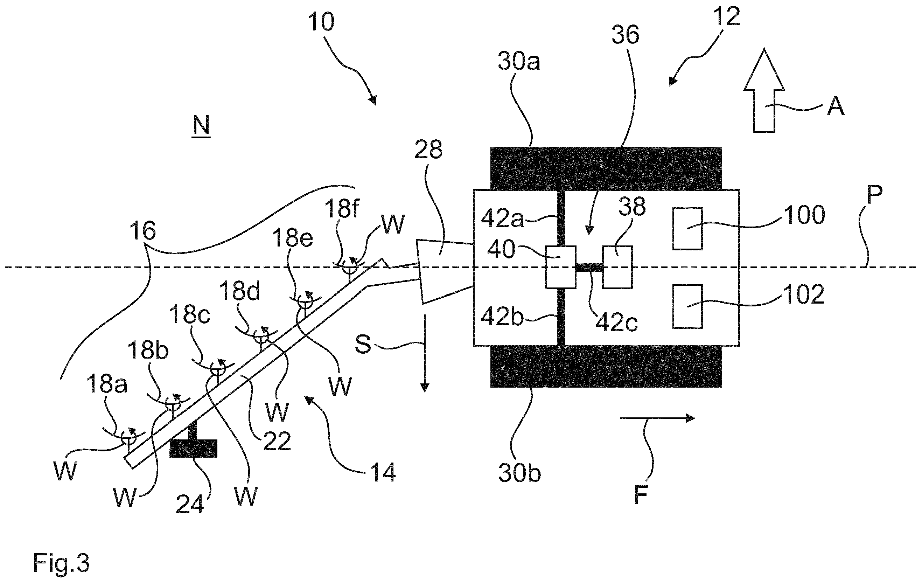

Die Fig. 3 zeigt das Bodenbearbeitungssystem 10 mit unbeabsichtigten auf das Bodenbearbeitungssystem 10 wirkenden Querkräften A bei der Bearbeitung der Nutzfläche N. Die unbeabsichtigten Querkräfte werden alternativ oder zusätzlich zu der Schwenkbewegung S des Träger 22 durch eine von der Steuerungseinrichtung 100 veranlasste Anpassung der Maschinenkonfiguration verhindert, indem eine Winkelanpassung W der Pflugkörper 18a-18f unabhängig von einer Schwenkbewegung S des Trägers 22 ausgeführt wird. Mittels der Winkelanpassung W der Pflugkörper 18a-18f kann der Anstellwinkel der Pflugkörper 18a-18f und somit der Bodeneingriff in die landwirtschaftliche Nutzfläche N so angepasst werden, dass unbeabsichtigte Quer- und/oder Längskräfte reduziert oder verhindert werden können, sodass das Bodenbearbeitungssystem 10 dem Soll-Bewegungspfad ohne Abweichung folgt und erhöhte Belastungen sowie ein erhöhter Verschleiß des Bodenbearbeitungssystems 10 vermieden werden.

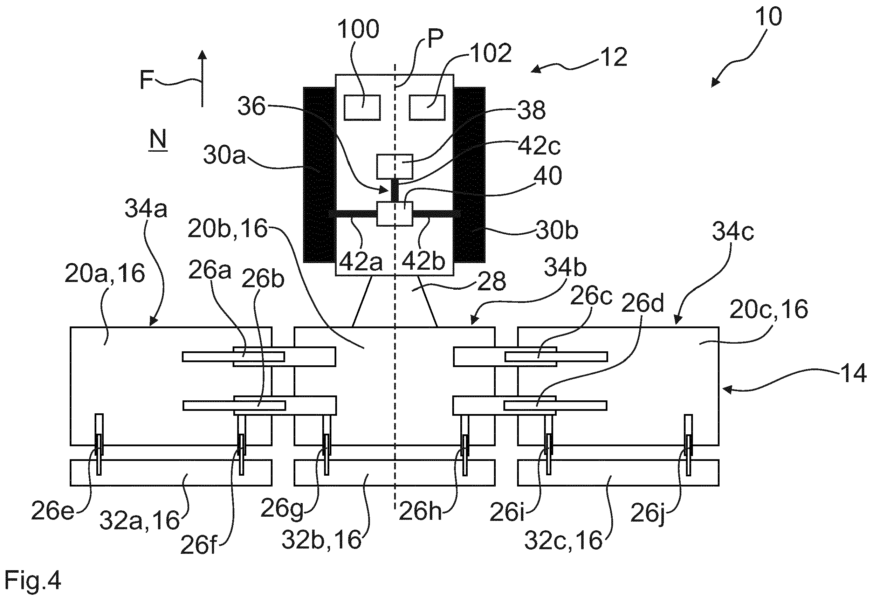

Die Fig. 4 zeigt ein Bodenbearbeitungssystem 10 mit dem als Raupenfahrzeug ausgebildeten Zugfahrzeug 12 und einer als Grubber ausgebildeten landwirtschaftlichen Arbeitsmaschine 14. Das Bodenbearbeitungssystem 10 folgt dem Soll-Bewegungspfad P in der Fahrtrichtung F. Die Arbeitsmaschine 14 umfasst Bodenbearbeitungswerkzeuge 16 und ist mittels der Kopplungsvorrichtung 28 mit dem Zugfahrzeug 12 verbunden. Die Arbeitsmaschine 14 umfasst Segmente 34a-34c. Das Segment 34b ist mit der Kopplungsvorrichtung 28 verbunden und umfasst als Schare 20b sowie eine Walze 32b. Das Segment 34a ist mittels Aktoren 26a, 26b mit dem Segment 34b verbunden und umfasst Schare 20a sowie eine Walze 32a. Das Segment 34c ist mittels Aktoren 26c, 26d mit dem Segment 34b verbunden und umfasst Schare 20c sowie eine Walze 32c. Die Walze 32a ist mittels der Aktoren 26e, 26f an dem Segment 34a angeordnet. Die Walze 32b ist mittels der Aktoren 26g, 26h an dem Segment 34b angeordnet. Die Walze 32c ist mittels der Aktoren 26i, 26j an dem Segment 34c angeordnet.

Mittels der Aktoren 26a, 26b können die Schare 20a gemeinsam mit dem Segment 34a ausgehoben und/oder um eine in Fahrtrichtung liegende Schwenkachse verschwenkt werden, um den Bodeneingriff der Schare 20a in die landwirtschaftliche Nutzfläche N zu verändern. Mittels der Aktoren 26c, 26d können die Schare 20c gemeinsam mit dem Segment 34c ausgehoben werden, um den Bodeneingriff der Schare 20c in die landwirtschaftliche Nutzfläche N zu verändern. Mittels der Aktoren 26e-26j können die Walzen 32a-32c zusätzlich ausgehoben werden. Die Aktoren 26a-26j werden von der Steuerungseinrichtung 100 in Abhängigkeit zumindest einer von der Betriebsgrößenerfassungseinheit 102 ermittelten Betriebsgröße des Antriebsstrangs 36 angesteuert.

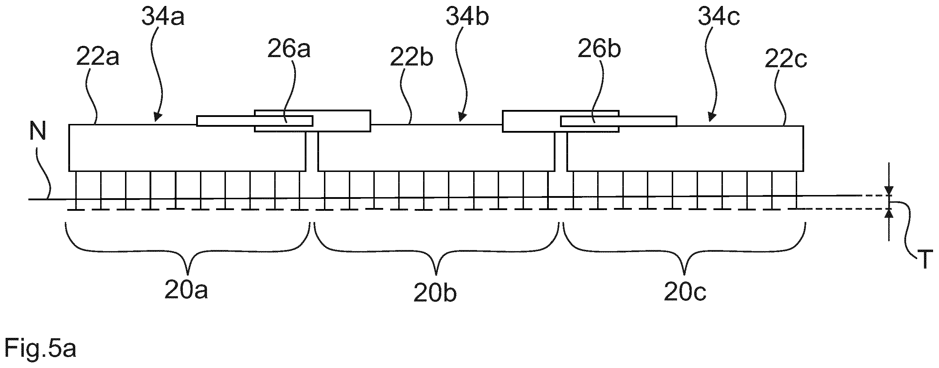

Die Fig. 5a zeigt die Schare 20a-20c in einer Detailansicht von hinten, während die Arbeitsmaschine 14, wie in Fig. 4 dargestellt, ihrem Soll-Bewegungspfad P folgt. Die Schare 20a sind an einem Träger 22a im Segment 34a der Arbeitsmaschine 14 angeordnet. Die Schare 20b sind an einem Träger 22b im Segment 34b der Arbeitsmaschine 14 angeordnet. Die Schare 20c sind an einem Träger 22c im Segment 34c der Arbeitsmaschine 14 angeordnet. Alle Schare 20a-20c haben über die Breite der Arbeitsmaschine 14 eine gleichmäßige Eingriffstiefe T in die landwirtschaftliche Nutzfläche N. Die Schare 20a können gemeinsam mit dem Träger 22a mittels des Aktors 26a ausgehoben werden, um die Eingriffstiefe T der Schare 20a in die Nutzfläche N anzupassen. Die Schare 20c können gemeinsam mit dem Träger 22c können mittels des Aktors 26b ausgehoben werden, um die Eingriffstiefe T der Schare 20c in die Nutzfläche N anzupassen.

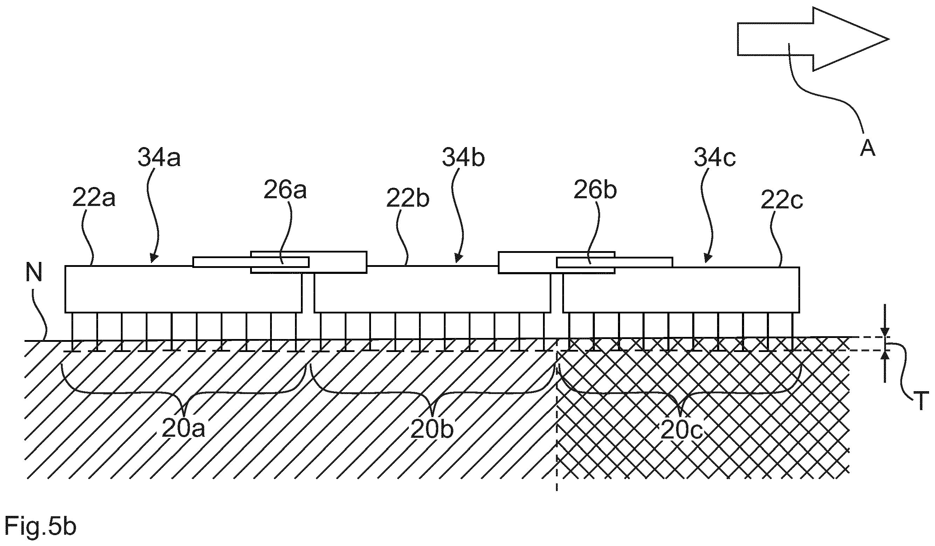

Die Fig. 5b zeigt die Schare 20a-20c aus der Fig. 5a während der Bearbeitung einer Nutzfläche N mit einer gleichmäßigen Eingriffstiefe T in die Nutzfläche N. Die Nutzfläche N weist im Bereich der Schare 20a, 20b andere Bodeneigenschaften, beispielsweise eine andere Dichte des Bodens, auf als im Bereich der Schare 20c. Aus den unterschiedlichen Bodenverhältnissen über die Breite des Bodenbearbeitungssystems 10 resultieren unbeabsichtigte auf das Bodenbearbeitungssystem 10 wirkende Querkräfte A.

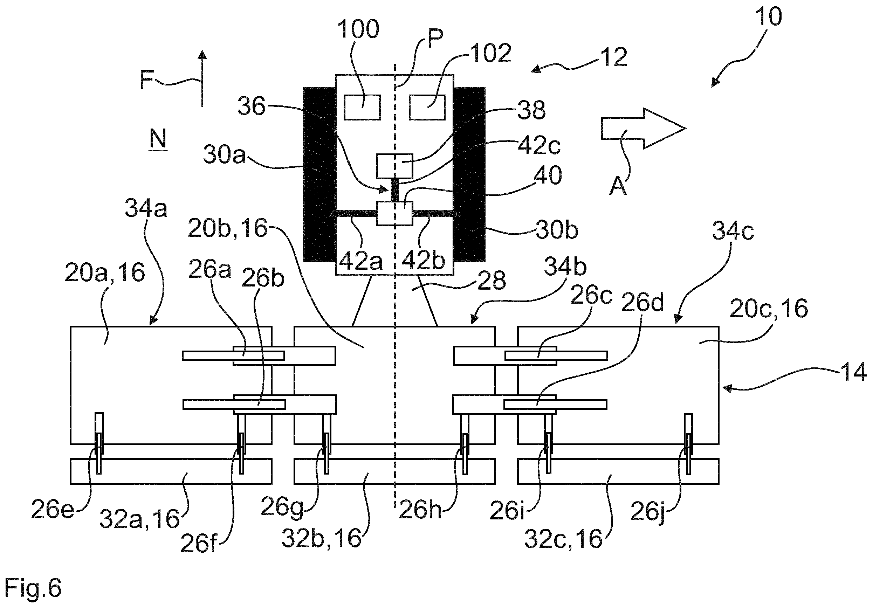

Die Fig. 6 zeigt das Bodenbearbeitungssystem 10 aus der Fig. 4 bei der Bearbeitung der Nutzfläche N, wobei unbeabsichtigte Querkräfte A auf das Bodenbearbeitungssystem 10 wirken. Um den Querkräften A entgegenzuwirken, wird durch die Steuerungseinrichtung 100 eine Anpassung der Maschinenkonfiguration in Abhängig der von der Betriebsgrößenerfassungseinheit 102 ermittelten Betriebsgrößen des Antriebsstrangs 36 vorgenommen. Eine Anpassung der Maschinenkonfiguration kann das Anpassen der Eingriffstiefe der Schare 20a-20c sein. Alternativ oder zusätzlich können die Querkräfte A verhindert werden, indem im Zuge einer Anpassung der Maschinenkonfiguration zumindest eine Betriebsgröße des Antriebsstrangs 36 angepasst wird. Beispielsweise kann den Querkräften A entgegengewirkt werden, indem die Leistung und/oder das Drehmoment an einem der Laufwerke 30a, 30b erhöht oder verringert wird.

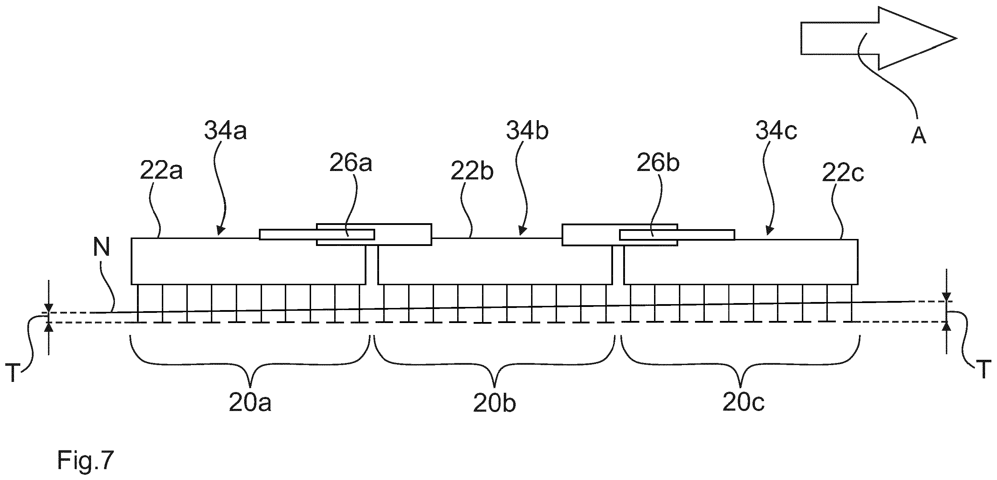

Die Fig. 7 zeigt die Schare 20a-20c in einer Detailansicht von hinten, während unbeabsichtigte Querkräfte A auf das Bodenbearbeitungssystem 10, wie in Fig. 6 dargestellt, wirken. Die Querkräfte A resultieren aus einer über die Breite der Arbeitsmaschine 14 ungleichmäßige Eingriffstiefe T der Schare 20a-20c in den Boden der Nutzfläche N. Eine ungleichmäßige Eingriffstiefe T kann beispielsweise aus ungleichmäßigen Bodenverhältnissen der Nutzfläche N resultieren. Die Eingriffstiefe der Schare 20a ist kleiner als die Eingriffstiefe T der Schare 20b. Die Eingriffstiefe T der Schare 20c ist größer als die Eingriffstiefe T der Schare 20b. Durch die ungleichmäßige Eingriffstiefe T wirken unbeabsichtigte Quer- und/oder Längskräfte auf das Bodenbearbeitungssystem 10, wodurch es zu einer Abweichung von dem Soll-Bewegungspfad P oder erhöhtem Verschleiß des Bodenbearbeitungssystems 10 kommen kann.

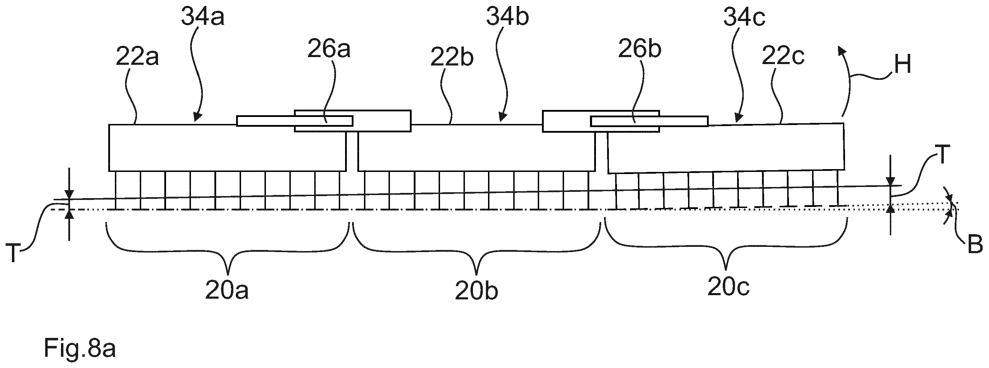

Die Fig. 8a zeigt die Schare 20a-20c in einer weiteren Detailansicht von hinten, wobei die Schare 20c gemeinsam mit dem Träger 22c mittels des Aktors 26b über eine Hubbewegung H um den Hubwinkel B verschwenkt sind. Durch das Verschwenken der Schare 20c wird die Eingriffstiefe T der Schare 20c in die Nutzfläche N verringert, sodass die Eingriffstiefe T über die Breite der Arbeitsmaschine 14 vergleichmäßigt wird. Durch eine gleichmäßige Eingriffstiefe T aller Schare 20a-20c werden unbeabsichtigte auf das Bodenbearbeitungssystem 10 wirkende Quer- und/oder Längskräfte verringert oder verhindert, sodass das Bodenbearbeitungssystem 10 folglich dem Soll-Bewegungspfad P folgt. Die Steuerungseinrichtung 100 steuert zum Ausführen der Hubbewegung H den Aktor 26b in Abhängigkeit der zumindest einen ermittelten Betriebsgröße des Antriebsstrangs 36 des Zufahrzeugs 12 des Bodenbearbeitungssystems 10 an.

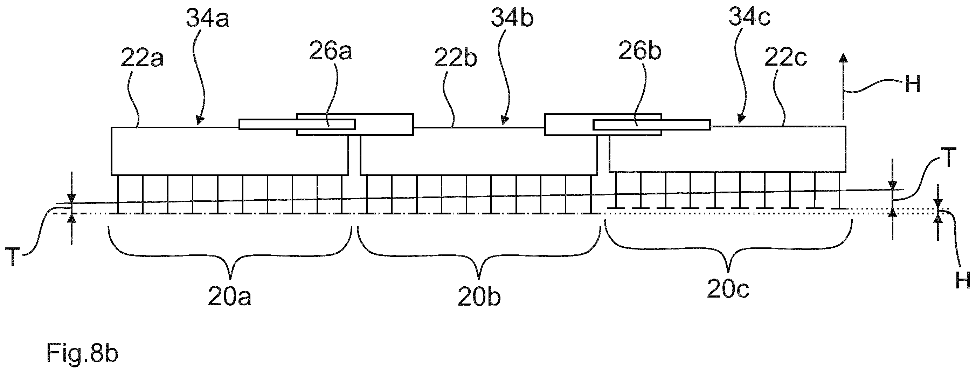

Die Fig. 8b zeigt die Schare 20a-20c in einer weiteren Detailansicht von hinten, wobei die Schare 20c gemeinsam mit dem Träger 22c mittels des Aktors 26b über eine lineare senkrecht zur Nutzfläche N verlaufende Hubbewegung H ausgehoben sind. Durch das lineare Ausheben der Schare 20c wird die Eingriffstiefe T der Schare 20c in die Nutzfläche N verringert, sodass die Eingriffstiefe T, in ähnlicher Weise wie beim Verschwenken der Schare 20c, über die Breite der Arbeitsmaschine 14 vergleichmäßigt wird. Durch eine gleichmäßige Eingriffstiefe T aller Schare 20a-20c werden unbeabsichtigte auf das Bodenbearbeitungssystem 10 wirkende Quer- und/oder Längskräfte verringert oder verhindert, sodass das Bodenbearbeitungssystem 10 folglich dem Soll-Bewegungspfad P folgt. Die Steuerungseinrichtung 100 steuert zum Ausführen der Hubbewegung H den Aktor 26b in Abhängigkeit der zumindest einen ermittelten Betriebsgröße des Antriebsstrangs 36 des Zufahrzeugs 12 des Bodenbearbeitungssystems 10 an.

### Bezugszeichen

- 10: Bodenbearbeitungssystem
- 12: Zugfahrzeug
- 14: Arbeitsmaschine
- 16: Bodenbearbeitungswerkzeuge
- 18a-18f: Pflugkörper
- 20a-20c: Schare
- 22, 22a-22c: Träger
- 24: Stützrad
- 26a-26j: Aktoren
- 28: Kopplungsvorrichtung
- 30a, 30b: Laufwerke
- 32a-32c: Walzen
- 34a-34c: Segmente
- 36: Antriebsstrang
- 38: Antrieb
- 40: Getriebe
- 42a-42c: Wellen

- 100: Steuerungseinrichtung
- 102: Betriebsgrößenerfassungseinheit

- A: Querkräfte
- B: Hubwinkel
- F: Fahrtrichtung
- H: Hubbewegung
- N: Nutzfläche
- P: Soll-Bewegungspfad
- S: Schwenkbewegung
- T: Eingriffstiefe
- W: Winkelanpassung

## Patentansprüche

1. Verfahren zum Steuern eines Bodenbearbeitungssystems (10) während des Bearbeitens einer landwirtschaftlichen Nutzfläche (N) mit einer Mehrzahl von Bodenbearbeitungswerkzeugen (16), mit dem Schritt:
- Ermitteln zumindest einer Betriebsgröße eines Antriebsstrangs (36) des Bodenbearbeitungssystems (10) mittels einer Betriebsgrößenerfassungseinheit (102);
und mit dem Schritt:
- Anpassen einer Maschinenkonfiguration des Bodenbearbeitungssystems (10) in Abhängigkeit der zumindest einen ermittelten Betriebsgröße des Antriebsstrangs (36) des Bodenbearbeitungssystems (10) zur Verringerung oder Vermeidung von durch einen Bodeneingriff der Bodenbearbeitungswerkzeuge (16) verursachten unbeabsichtigten auf das Bodenbearbeitungssystem (10) wirkenden Querkräften (A) mittels einer Steuerungseinrichtung (100); und
**dadurch gekennzeichnet, dass** die mittels der Betriebsgrößenerfassungseinheit (102) ermittelte Betriebsgröße des Antriebsstrangs (36) eine Leistung und/oder ein Drehmoment ist.

2. Verfahren nach Anspruch 1,
**dadurch gekennzeichnet, dass** durch das Anpassen der Maschinenkonfiguration des Bodenbearbeitungssystems (10) durch den Bodeneingriff der Bodenbearbeitungswerkzeuge (16) verursachte unbeabsichtigte Abweichungen von einem Soll-Bewegungspfad (P) des Bodenbearbeitungssystems (10) reduziert oder verhindert werden.

3. Verfahren nach einem der vorstehenden Ansprüche,
**dadurch gekennzeichnet, dass** zumindest zwei Betriebsgrößen des Antriebsstrangs (36) ermittelt und mittels der Steuerungseinrichtung (100) miteinander und/oder mit einem Sollwert verglichen werden, wobei das Anpassen der Maschinenkonfiguration zur Verringerung oder Vermeidung von durch den Bodeneingriff der Bodenbearbeitungswerkzeuge (16) verursachten unbeabsichtigten auf das Bodenbearbeitungssystem (10) wirkenden Querkräften (A) vorzugsweise dann erfolgt, wenn ein die zumindest zwei Betriebsgrößen berücksichtigender Betriebsgrößenvergleichs eine Grenzwertüberschreitung ergibt.

4. Verfahren nach einem der vorstehenden Ansprüche,
**dadurch gekennzeichnet, dass** ein Antrieb (38) des Antriebsstrangs (36) als Elektromotor ausgebildet ist, wobei zum Ermitteln der Betriebsgröße des Antriebsstrangs (36) die an dem Elektromotor anliegende elektrische Spannung und/oder die vom Elektromotor aufgenommene elektrische Stromstärke erfasst wird.

5. Verfahren nach einem der vorstehenden Ansprüche,
**dadurch gekennzeichnet, dass** beim Anpassen der Maschinenkonfiguration des Bodenbearbeitungssystems (10) eine Stellung zumindest eines Bodenbearbeitungswerkzeugs (16) zur Verringerung oder Vermeidung der unbeabsichtigten auf das Bodenbearbeitungssystem (10) wirkenden Querkräften (A) angepasst wird.

6. Verfahren nach einem der vorstehenden Ansprüche,
**dadurch gekennzeichnet, dass** die Bodenbearbeitungswerkzeuge (16) als Pflugkörper (18a-18f) und/oder Schare (20a-20c) ausgebildet sind, wobei beim Anpassen der Maschinenkonfiguration die Ausrichtung zumindest eines Pflugkörpers (18a-18f) und/oder zumindest eines Schares (20a-20c) zur Verringerung oder Vermeidung der unbeabsichtigten auf das Bodenbearbeitungssystem (10) wirkenden Querkräften (A) angepasst wird.

7. Verfahren nach einem der vorstehenden Ansprüche,
**dadurch gekennzeichnet, dass** die Pflugkörper (18a-18f) und/oder die Schare (20a-20c) an zumindest einem Träger (22, 22a-22c) des Bodenbearbeitungssystems (10) angeordnet sind, wobei beim Anpassen der Maschinenkonfiguration die Pflugkörper (18a-18f) und/oder die Schare (20a-20c) zur Verringerung oder Vermeidung der unbeabsichtigten auf das Bodenbearbeitungssystem (10) wirkenden Querkräften (A) vorzugsweise mittels des Trägers (22, 22a-22c) gemeinsam um eine Hochachse verschwenkt werden.

8. Verfahren nach Anspruch 7,
**dadurch gekennzeichnet, dass** der Anstellwinkel der Pflugkörper (18a-18f) und/oder der Schare (20a-20c) beim Anpassen der Maschinenkonfiguration unabhängig von einer Schwenkbewegung (S) des Trägers (22, 22a-22c) zur Verringerung oder Vermeidung der unbeabsichtigten auf das Bodenbearbeitungssystem (10) wirkenden Querkräften (A) verändert wird.

9. Verfahren nach einem der vorstehenden Ansprüche,
**dadurch gekennzeichnet, dass** beim Anpassen der Maschinenkonfiguration die Eingriffstiefe (T) der Pflugkörper (18a-18f) und/oder der Schare (20a-20c) in den Boden vorzugsweise mittels einer Hubbewegung (H) der Pflugkörper (18a-18f) und/oder der Schare (20a-20c) zur Verringerung oder Vermeidung der unbeabsichtigten auf das Bodenbearbeitungssystem (10) wirkenden Querkräften (A) verändert wird.

10. Verfahren nach einem der vorstehenden Ansprüche,
**dadurch gekennzeichnet, dass** beim Anpassen der Maschinenkonfiguration des Bodenbearbeitungssystems (10) eine Betriebsgröße des Antriebsstrangs (36) zur Verringerung oder Vermeidung der unbeabsichtigten auf das Bodenbearbeitungssystem (10) wirkenden Querkräften (A) angepasst wird.

11. Verfahren nach einem der vorstehenden Ansprüche,
**dadurch gekennzeichnet, dass** beim Anpassen der Maschinenkonfiguration des Bodenbearbeitungssystems (10) die Drehzahl und/oder die Leistung und/oder das Drehmoment und/oder der Lenkeinschlag an zumindest einem Rad und/oder zumindest einem Laufwerk (30a, 30b) des Bodenbearbeitungssystems (10) angepasst wird.

12. Verfahren nach einem der vorstehenden Ansprüche,
**dadurch gekennzeichnet, dass** beim Anpassen der Maschinenkonfiguration des Bodenbearbeitungssystems (10) in Abhängigkeit der ermittelten Betriebsgröße des Antriebsstrangs (36) mittels der Steuerungseinrichtung (100) beabsichtigte Abweichungen (A) von dem Soll-Bewegungspfad (P) des Bodenbearbeitungssystems (10) und/oder beabsichtigte auf das Bodenbearbeitungssystem (10) wirkende Quer- und/oder Längskräfte berücksichtigt werden, wobei beabsichtigte Abweichungen (A) von dem Soll-Bewegungspfad (P) des Bodenbearbeitungssystems (10) und/oder beabsichtigte auf das Bodenbearbeitungssystem (10) wirkende Quer- und/oder Längskräfte vorzugsweise von einer aktuellen Maschinenkonfiguration des Bodenbearbeitungssystems (10) und/oder aktuellen beabsichtigten Fahrsituation und/oder einer vorgeplanten beabsichtigten Änderung der Fahrsituation verursacht werden.

13. Bodenbearbeitungssystem (10) zum Bearbeiten einer landwirtschaftlichen Nutzfläche (N), mit
- einer Mehrzahl von Bodenbearbeitungswerkzeugen (16); und
- einer Betriebsgrößenerfassungseinheit (102) zum Ermitteln zumindest einer Betriebsgröße eines Antriebsstrangs (36) des Bodenbearbeitungssystems (10);
**gekennzeichnet durch** Steuerungseinrichtung (100), welche dazu eingerichtet ist, eine Maschinenkonfiguration des Bodenbearbeitungssystems (10) in Abhängigkeit der ermittelten Betriebsgröße des Antriebsstrangs (36) des Bodenbearbeitungssystems (10) zur Verringerung oder Vermeidung von durch den Bodeneingriff der Bodenbearbeitungswerkzeuge (16) verursachten unbeabsichtigten auf das Bodenbearbeitungssystem (10) wirkenden Querkräften (A) anzupassen, wobei die mittels der Betriebsgrößenerfassungseinheit (102) ermittelte Betriebsgröße des Antriebsstrangs (36) eine Leistung und/oder ein Drehmoment ist.

14. Bodenbearbeitungssystem nach Anspruch 13,
**dadurch gekennzeichnet, dass** das Bodenbearbeitungssystem (10) dazu eingerichtet ist, das Verfahren nach einem der Ansprüche 1 bis 12 auszuführen.

## Claims

1. Method for controlling a soil-cultivating system (10) during the cultivation of an agricultural area (N) with a plurality of soil-cultivating tools (16), comprising the step:
- determining at least one operating parameter of a drive train (36) of the soil-cultivating system (10) using an operating parameter acquisition unit (102);
and comprising the step:
- adapting a machine configuration of the soil-cultivating system (10) depending on the at least one determined operating parameter of the drive train (36) of the soil-cultivating system (10) to reduce or avoid unintended lateral forces (A) acting on the soil-cultivating system (10) caused by soil engagement of the soil-cultivating tools (16) by means of a control device (100); and
**characterized in that** the
operating parameter of the drive train (36) determined by the operating parameter acquisition unit (102) is a power and/or a torque.

2. Method according to claim 1,
**characterized in that** by adapting the machine configuration of the soil-cultivating system (10), unintended deviations from a target movement path (P) of the soil-cultivating system (10) caused by the soil engagement of the soil-cultivating tools (16) are reduced or prevented.

3. Method according to any of the preceding claims,
**characterized in that** at least two operating parameters of the drive train (36) are determined and compared with each other and/or with a setpoint by means of the control device (100), the adaptation of the machine configuration to reduce or avoid unintended lateral forces (A) that act on the soil-cultivating system (10) caused by the soil engagement of the soil-cultivating tools (16) preferably taking place when a comparison of the operating parameters taking into account the at least two operating parameters results in an exceedance of a limit value.

4. Method according to any of the preceding claims,
**characterized in that** a drive (38) of the drive train (36) is designed as an electric motor, the electrical voltage applied to the electric motor and/or the electrical current absorbed by the electric motor being recorded in order to determine the operating parameter of the drive train (36).

5. Method according to any of the preceding claims,
**characterized in that** when the machine configuration of the soil-cultivating system (10) is adapted, a position of at least one soil-cultivating tool (16) is adapted to reduce or avoid the unintended lateral forces (A) acting on the soil-cultivating system (10).

6. Method according to any of the preceding claims,
**characterized in that** the soil-cultivating tools (16) are designed as plow bodies (18a-18f) and/or shares (20a-20c), when the machine configuration is adapted the orientation of at least one plow body (18a-18f) and/or at least one share (20a-20c) being adapted to reduce or avoid the unintended lateral forces (A) acting on the soil-cultivating system (10).

7. Method according to any of the preceding claims,
**characterized in that** the plow bodies (18a-18f) and/or the shares (20a-20c) are arranged on at least one support (22, 22a-22c) of the soil-cultivating system (10), when the machine configuration is adapted the plow bodies (18a-18f) and/or the shares (20a-20c) preferably being pivoted together about a vertical axis by means of the support (22, 22a-22c) to reduce or avoid the unintended lateral forces (A) acting on the soil-cultivating system (10).

8. Method according to claim 7,
**characterized in that** the angle of attack of the plow bodies (18a-18f) and/or of the shares (20a-20c) is changed when the machine configuration is adapted, independently of a pivoting movement (S) of the support (22, 22a-22c), to reduce or avoid the unintended lateral forces (A) acting on the soil-cultivating system (10).

9. Method according to any of the preceding claims,
**characterized in that** when the machine configuration is adapted, the penetration depth (T) of the plow bodies (18a-18f) and/or of the shares (20a-20c) into the soil is preferably changed by means of a lifting movement (H) of the plow bodies (18a-18f) and/or of the shares (20a-20c) to reduce or avoid the unintended lateral forces (A) acting on the soil-cultivating system (10).

10. Method according to any of the preceding claims,
**characterized in that** when the machine configuration of the soil-cultivating system (10) is adapted, an operating parameter of the drive train (36) is adapted to reduce or avoid the unintended lateral forces (A) acting on the soil-cultivating system (10).

11. Method according to any of the preceding claims,
**characterized in that** when the machine configuration of the soil-cultivating system (10) is adapted, the rotational speed and/or the power and/or the torque and/or the steering angle is adapted on at least one wheel and/or at least one running gear (30a, 30b) of the soil-cultivating system (10).

12. Method according to any of the preceding claims,
**characterized in that** when the machine configuration of the soil-cultivating system (10) is adapted depending on the determined operating parameter of the drive train (36) by means of the control device (100), intended deviations (A) from the target movement path (P) of the soil-cultivating system (10) and/or intended transverse and/or longitudinal forces that act on the soil-cultivating system (10) are taken into account, intended deviations (A) from the target movement path (P) of the soil-cultivating system (10) and/or intended transverse and/or longitudinal forces that act on the soil-cultivating system (10) preferably being caused by a current machine configuration of the soil-cultivating system (10) and/or current intended driving situation and/or a pre-planned intended change of the driving situation.

13. Soil-cultivating system (10) for cultivating an agricultural area (N), with
- a plurality of soil-cultivating tools (16); and
- an operating parameter acquisition unit (102) for determining at least one operating parameter of a drive train (36) of the soil-cultivating system (10);
**characterized by** control device (100) which is configured to adapt a machine configuration of the soil-cultivating system (10) depending on the determined operating parameter of the drive train (36) of the soil-cultivating system (10) in order to reduce or avoid unintended lateral forces (A) acting on the soil-cultivating system (10) caused by the soil engagement of the soil-cultivating tools (16), the operating parameter of the drive train (36) determined by means of the operating parameter acquisition unit (102) being a power and/or a torque.

14. Soil-cultivating system according to claim 13,
**characterized in that** the soil-cultivating system (10) is configured to carry out the method according to any of claims 1 to 12.

## Revendications

1. Procédé pour la commande d'un système de travail du sol (10) pendant le travail d'une surface agricole utile (N) à l'aide d'une pluralité d'outils de travail du sol (16), comportant l'étape consistant à :
- déterminer au moins une grandeur de fonctionnement d'une chaîne cinématique (36) du système de travail du sol (10) à l'aide d'une unité de détection de grandeurs de fonctionnement (102) ;
et comportant l'étape consistant à :
- adapter, à l'aide d'un dispositif de commande (100), une configuration de machine du système de travail du sol (10) en fonction de l'au moins une grandeur de fonctionnement déterminée de la chaîne cinématique (36) du système de travail du sol (10) afin de réduire ou d'éviter des forces transversales (A) involontaires agissant sur le système de travail du sol (10) et provoquées par l'interaction des outils de travail du sol (16) avec le sol ; et
**caractérisé en ce que** la
grandeur de fonctionnement de la chaîne cinématique (36) déterminée au moyen de l'unité de détection de grandeurs de fonctionnement (102) est une puissance et/ou un couple.

2. Procédé selon la revendication 1,
**caractérisé en ce que**, au moyen de l'adaptation de la configuration de machine du système de travail du sol (10), des écarts involontaires par rapport à une trajectoire de déplacement de consigne (P) du système de travail du sol (10) provoqués par l'interaction des outils de travail du sol (16) avec le sol sont réduits ou évités.

3. Procédé selon l'une des revendications précédentes,
**caractérisé en ce qu'**au moins deux grandeurs de fonctionnement de la chaîne cinématique (36) sont déterminées et comparées entre elles et/ou avec une valeur de consigne au moyen du dispositif de commande (100), dans lequel l'adaptation de la configuration de machine pour réduire ou éviter les forces transversales (A) involontaires agissant sur le système de travail du sol (10) et provoquées par l'interaction des outils de travail du sol (16) avec le sol est effectuée préférence lorsqu'une comparaison des grandeurs de fonctionnement tenant compte des au moins deux grandeurs de fonctionnement résulte en un dépassement de la valeur limite.

4. Procédé selon l'une des revendications précédentes,
**caractérisé en ce qu'**un entraînement (38) de la chaîne cinématique (36) est conçu comme un moteur électrique, dans lequel, pour déterminer la grandeur de fonctionnement de la chaîne cinématique (36), la tension électrique appliquée au moteur électrique et/ou l'intensité de courant électrique absorbé par le moteur électrique sont détectées.

5. Procédé selon l'une des revendications précédentes,
**caractérisé en ce que**, lors de l'adaptation de la configuration de machine du système de travail du sol (10), une position d'au moins un outil de travail du sol (16) est adaptée pour réduire ou éviter les forces transversales (A) involontaires agissant sur le système de travail du sol (10).

6. Procédé selon l'une des revendications précédentes,
**caractérisé en ce que** les outils de travail du sol (16) sont conçus sous forme de corps de charrue (18a-18f) et/ou de socs (20a-20c), dans lequel, lors de l'adaptation de la configuration de machine, l'orientation d'au moins un corps de charrue (18a-18f) et/ou d'au moins un soc (20a-20c) est adaptée afin de réduire ou d'éviter les forces transversales (A) involontaires agissant sur le système de travail du sol (10).

7. Procédé selon l'une des revendications précédentes,
**caractérisé en ce que** les corps de charrue (18a-18f) et/ou les socs (20a-20c) sont disposés sur au moins un support (22, 22a-22c) du système de travail du sol (10), dans lequel, lors de l'adaptation de la configuration de machine, les corps de charrue (18a-18f) et/ou les socs (20a-20c) sont pivotés ensemble autour d'un axe vertical, de préférence au moyen du support (22, 22a-22c), afin de réduire ou d'éviter les forces transversales (A) involontaires agissant sur le système de travail du sol (10).

8. Procédé selon la revendication 7,
**caractérisé en ce que**, lors de l'adaptation de la configuration de machine, l'angle d'attaque des corps de charrue (18a-18f) et/ou des socs (20a-20c) est modifié indépendamment d'un mouvement de pivotement (S) du support (22, 22a-22c) afin de réduire ou d'éviter les forces transversales (A) involontaires agissant sur le système de travail du sol (10).

9. Procédé selon l'une des revendications précédentes,
**caractérisé en ce que,** lors de l'adaptation de la configuration de machine**,** la profondeur de pénétration (T) des corps de charrue (18a-18f) et/ou des socs (20a-20c) dans le sol est modifiée, de préférence au moyen d'un mouvement de levage (H) des corps de charrue (18a-18f) et/ou des socs (20a-20c), afin de réduire ou d'éviter les forces transversales (A) involontaires agissant sur le système de travail du sol (10).

10. Procédé selon l'une des revendications précédentes,
**caractérisé en ce que,** lors de l'adaptation de la configuration de machine du système de travail du sol (10), une grandeur de fonctionnement de la chaîne cinématique (36) est adaptée afin de réduire ou d'éviter les forces transversales (A) involontaires agissant sur le système de travail du sol (10).

11. Procédé selon l'une des revendications précédentes,
**caractérisé en ce que**, lors de l'adaptation de la configuration de machine du système de travail du sol (10), la vitesse de rotation et/ou la puissance et/ou le couple et/ou le braquage de roue d'au moins une roue et/ou d'au moins un train de roulement (30a, 30b) du système de travail du sol (10) sont adaptés.

12. Procédé selon l'une des revendications précédentes,
**caractérisé en ce que**, lors de l'adaptation de la configuration de machine du système de travail du sol (10), des écarts (A) prévus par rapport à la trajectoire de déplacement de consigne (P) du système de travail du sol (10) et/ou des forces transversales et/ou longitudinales prévues agissant sur le système de travail du sol (10) sont pris en compte en fonction de la grandeur de fonctionnement déterminée de la chaîne cinématique (36) au moyen du dispositif de commande (100), dans lequel les écarts (A) prévus par rapport à la trajectoire de déplacement de consigne (P) du système de travail du sol (10) et/ou les forces transversales et/ou longitudinales prévues agissant sur le système de travail du sol (10) sont provoqués de préférence par une configuration de machine actuelle du système de travail du sol (10) et/ou une situation de conduite prévue actuelle et/ou un changement prévu planifié de la situation de conduite.

13. Système de travail du sol (10) pour le travail d'une surface agricole utile (N), comportant
- une pluralité d'outils de travail du sol (16) ; et
- une unité de détection de grandeurs de fonctionnement (102) permettant de déterminer au moins une grandeur de fonctionnement d'une chaîne cinématique (36) du système de travail du sol (10) ;
**caractérisé par** un dispositif de commande (100) qui est configuré pour adapter une configuration de machine du système de travail du sol (10) en fonction de la grandeur de fonctionnement déterminée de la chaîne cinématique (36) du système de travail du sol (10) afin de réduire ou d'éviter des forces transversales (A) involontaires agissant sur le système de travail du sol (10) et provoquées par l'interaction des outils de travail du sol (16) avec le sol, dans lequel la grandeur de fonctionnement de la chaîne cinématique (36) déterminée au moyen de l'unité de détection de grandeurs de fonctionnement (102) est une puissance et/ou un couple.

14. Système de travail du sol selon la revendication 13,
**caractérisé en ce que** le système de travail du sol (10) est configuré pour exécuter le procédé selon l'une des revendications 1 à 12.
